(19) Europäisches Patentamt

European Patent Office

Office européen des brevets

(11) Veröffentlichungsnummer : **0 469 019 B1**

(12) **EUROPÄISCHE PATENTSCHRIFT**

(45) Veröffentlichungstag der Patentschrift :
**04.11.92 Patentblatt 92/45**

(21) Anmeldenummer : **90906189.7**

(22) Anmeldetag : **17.04.90**

(86) Internationale Anmeldenummer :
**PCT/EP90/00611**

(87) Internationale Veröffentlichungsnummer :
**WO 91/02375 21.02.91 Gazette 91/05**

(51) Int. Cl.⁵ : **H01J 41/18, F04D 33/00, H02N 11/00**

(54) **MIKROMINIATURISIERTE ELEKTROSTATISCHE PUMPE.**

(30) Priorität : **03.08.89 DE 3925749**

(43) Veröffentlichungstag der Anmeldung :
**05.02.92 Patentblatt 92/06**

(45) Bekanntmachung des Hinweises auf die
Patenterteilung :
**04.11.92 Patentblatt 92/45**

(84) Benannte Vertragsstaaten :
**AT BE CH DE DK ES FR GB IT LI LU NL SE**

(56) Entgegenhaltungen :
**US-A- 2 279 586**
**US-A- 3 267 859**
**US-A- 3 665 241**
**US-A-35 546 69**
**SENSORS AND ACTUATORS, Volume A21, No. 1-3, February 1990, NL "Proc. of the 5th Int. Conference on Solid-State Sensors andActuators and Eurosensors III, June 25-30, 1989, Part II, Montreux (CH)" S.F. BART et al. : "Microfabricated Electrohydrodynamic-Pumps, pages 193-197, see page 196, left-hand column, paragraph 5 - right-hand column, paragraph 1 ; figure 3.**

(56) Entgegenhaltungen :
**PROCEEDINGS OF THE IEEE Volume 70, No. 5, May 1982, New York, NY (USA), pages 420-457 ; K.E. PETERSEN : "Silicon as aMechanical Material", see page 431, left-hand column, paragraph 2 - page 432, right-hand column, paragraph 1 ; figure 17.**
**Proceedings IEEE Micro Electro Mechanical Systems, Nappa Valley, California (US), 11-14 February, 1990, A. RICHTER et al. :"An Electro-hydrodynamic Micro-Pump", pages 99-104, see the whole article.**

(73) Patentinhaber :
**FRAUNHOFER-GESELLSCHAFT ZUR FÖRDERUNG DER ANGEWANDTEN FORSCHUNG E.V.**
**Leonrodstrasse 54**
**W-8000 München 19 (DE)**

(72) Erfinder : **RICHTER, Axel**
**Haldenbergstrasse 28**
**W-8000 München 50 (DE)**
Erfinder : **SANDMEIER, Herrmann**
**Ruhstorf, Hofmark 3**
**W-8384 Simbach (DE)**

(74) Vertreter : **Schoppe, Fritz, Dipl.-Ing. et al**
**Seitnerstrasse 42**
**W-8023 Pullach bei München (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die vorliegende Erfindung betrifft ein Verfahren zum Herstellen einer mikrominiaturisierten elektrostatischen Pumpe nach dem Oberbegriff des Patentanspruchs 1 sowie eine mikrominiaturisierte elektrostatische Pumpe nach dem Oberbegriff des Patentanspruchs 2.

Elektrostatische Pumpen, die ohne bewegte Teile arbeiten, sind beispielsweise aus der US-PS 35 54 669, aus der US-PS 46 34 057, aus der US-PS 33 98 685 sowie aus der US-PS 44 63 798 seit geraumer Zeit bekannt. Derartige elektrostatische Pumpen haben zumindest zwei im wesentlichen in Pumpströmungsrichtung voneinander beabstandete Elektroden, die von der zu pumpenden Flüssigkeit oder von dem zu pumpenden Gas umströmt werden. Die Elektroden sind mit einem Gleich- oder Wechselspannungspotential beaufschlagbar, um einen zwischen den Elektroden durch die Flüssigkeit oder durch das Gas fließenden Ionenstrom zu injizieren. Bei den mittels einer elektrostatischen Pumpe pumpbaren Gasen oder Flüssigkeiten handelt es sich um Medien, die im wesentlichen nichtleitend sind und üblicherweise einen Widerstandswert in der Größenordnung von $10^7$ bis $10^{10}$ Ohm cm aufweisen. Die von einer üblicherweise mit einer scharfen Spitze ausgefürten Elektrode in das Gas oder die Flüssigkeit injizierten Ionen durchlaufen das Gas oder die Flüssigkeit bei ihrer Bewegung zu der gegenüberliegenden Elektrode. Diese Relativbewegung der Ionen in der zu pumpenden Flüssigkeit oder dem zu pumpenden Gas erzeugt die Pumpwirkung einer derartigen elektrostatischen Pumpe, die somit ohne bewegliche Teile auskommnt.

Typische elektrostatische Pumpen nach dem Stand der Technik, wie er beispielsweise durch die US-PS 44 63 798 oder durch die US-PS 46 34 057 gebildet wird, bestehen im wesentlichen aus einem rohrförmigen Gehäusekörper, der von einem Fluid oder Gas in Axialrichtung durchströmbar ist und eine erste, zentrisch angeordnete kegelspitzförmige Elektrode aufweist, die in einem üblicherweise über ein Gewinde einstellbaren Axialabstand von der Gegenelektrode angeordnet ist, die im wesentlichen als Düse mit einer kegelstumpfförmigen Ausnehmung gebildet wird. Typischerweise besteht der Gehäusekörper der bekannten elektrostatischen Pumpen aus Kunststoff. Die aus Metall bestehenden Elektroden sind üblicherweise in den Gehäusekörper eingeschraubt. Die bekannte elektrostatische Pumpe mit der beschriebenen Struktur erfordert nicht nur vergleichsweise hohe Betriebsspannungen in der Größenordnung von 15 kV bis 40 kV, sondern auch eine aufwendige Justage zur Einstellung eines geeigneten Elektrodenabstandes. Ferner verbietet die Struktur der bekannten elektrostatischen Pumpe deren weitergehende Miniaturisierung, so daß auch die Anwendungsbereiche der bekannten elektrostatischen Pumpe eingeschränkt sind.

Aus der eingangs genannten US-PS 35 54 669 ist es ferner bekannt, bei einer elektrostatischen Pumpe die Elektroden durch Ätzen von Ausnehmungen in Pumpenkörpern zu erzeugen. Hierzu werden die gewünschten Elektrodenlängsschnittformen in Pumpströmungsrichtung auf den Körpern abgedeckt, woraufhin die Ausnehmungen senkrecht zu der späteren Pumpströmungsrichtung geätzt werden. Zwei derartige, mit einstückigen Elektroden versehene Pumpenkörper werden mit ihren Hauptflächen zwischen Abdeckplatten derart angeordnet, daß sich die Hauptflächen der Pumpenkörper in der späteren Strömungsrichtung erstrecken. Eine derartige Pumpenstruktur hat zumindest dann, wenn sie einschichtig ausgefürt wird, einen sehr geringen wirksamen Pumpquerschnitt. Um nennenswerte Pumpquerschnitte zu erzielen, ist eine mehrschichtige, sandwichartige Struktur mit einer Mehrzahl von Pumpenkörpern und Abdeckplatten erforderlich, wodurch die bekannte Pumpe sowohl in ihrer Herstellung aufwendig als auch in ihrer Struktur kompliziert ist.

Die US-PS 32 67 859 offenbart eine elektrostatische Pumpe mit einem zylindrischen Kunststoffgehäuse, in dem zwei voneinander beabstandete Metallelektrodenplatten angeordnet sind, deren Elektroden eine im Querschnitt stegförmige oder schneidenförmige Gestalt haben. Für eine Mikrominiaturisierung ist diese Pumpe nicht geeignet.

Aus der Fachveröffentlichung PROCEEDINGS OF THE IEEE, Band 70, Nr. 5, Mai 1982, Seiten 420 bis 457 ist es bekannt, mikromechanische Strukturen aus Halbleitermaterialien durch Ätzen herzustellen.

In der Fachveröffentlichung SENSORS AND ACTUATORS, Band A21, Nr. 1 bis 3, Februar 1990, Seiten 193 bis 197 ist eine mikrominiaturisierte elektrohydrodynamische Fluidpumpe beschrieben, die nach einem mit dem Wirkprinzip elektrostatischer Pumpen nicht vergleichbaren Wirkprinzip arbeitet. Bei einer derartigen elektrohydrodynamischen Pumpe wird die Pumpwirkung nicht durch Ladungsträgerinjektion in ein Fluid erzeugt, sondern durch Wanderfelder bewirkt, die mit elektrischen Ladungen an einer Grenzfläche zusammenwirken.

Aus der US-PS 36 65 241 ist ein Gerät zum Erzeugen elektrischer Felder zum Zwecke der Ionisation von Gasen bekannt. Das bekannte Felderzeugungsgerät arbeitet mit zwei gegeneinander isolierten Platten, von denen eine eine Mehrzahl von kegelförmigen oder pyramidenförmigen Ionisationsspitzen und die andere eine Mehrzahl von korrespondierenden Ausnehmungen aufweist.

Aus der US-PS 22 79 586 ist eine elektrohydrodynamische Pumpe bekannt, die zum Pumpen gasförmiger Medien dient und eine Mehrzahl von aus Halbleiterwerkstoffen bestehenden, im Querschnitt tropfenförmigen Elektrodenkörpern aufweist, die zueinander in Pumpströmungsrichtung beabstandet sind.

Ausgehend von dem oben genannten Stand der Technik liegt der vorliegenden Erfindung die Aufgabe zugrunde, ein Verfahren zum Herstellen einer mikrominiaturisierten elektrostatischen Pumpe sowie eine elektrostatische Pumpe der eingangs genannten Art so weiterzubilden, daß die Pumpe bei einfacher Herstellbarkeit einen hohen wirksamen Pumpquerschnitt bei vorgegebenen Außenabmessungen aufweist, so daß sie weiter miniaturisiert werden kann.

Diese Aufgabe wird durch ein Verfahren zum Herstellen einer mikrominiaturisierten elektrostatischen Pumpe gemäß Patentanspruch 1 sowie durch eine mikrominiaturisierte elektrostatische Pumpe gemäß Patentanspruch 2 gelöst.

Weiterbildungen der erfindungsgemäßen miniaturisierten elektrostatischen Pumpe sind in den abhängigen Ansprüchen angegeben.

Bevorzugte Ausführungsbeispiele der vorliegenden Erfindung werden nachfolgend unter Bezugnahme auf die Zeichnungen näher erläutert. Es zeigen:

Fig. 1 eine perspektivische Darstellung, teilweise in Schnittdarstellung, eines Halbleiterkörpers, der einen Bestandteil einer Ausführungsform der erfindungsgemäßen Pumpe bildet; und

Fig. 2 bis 7 Querschnittsdarstellungen verschiedener Ausführungsformen der erfindungsgemäßen elektrostatischen Pumpe.

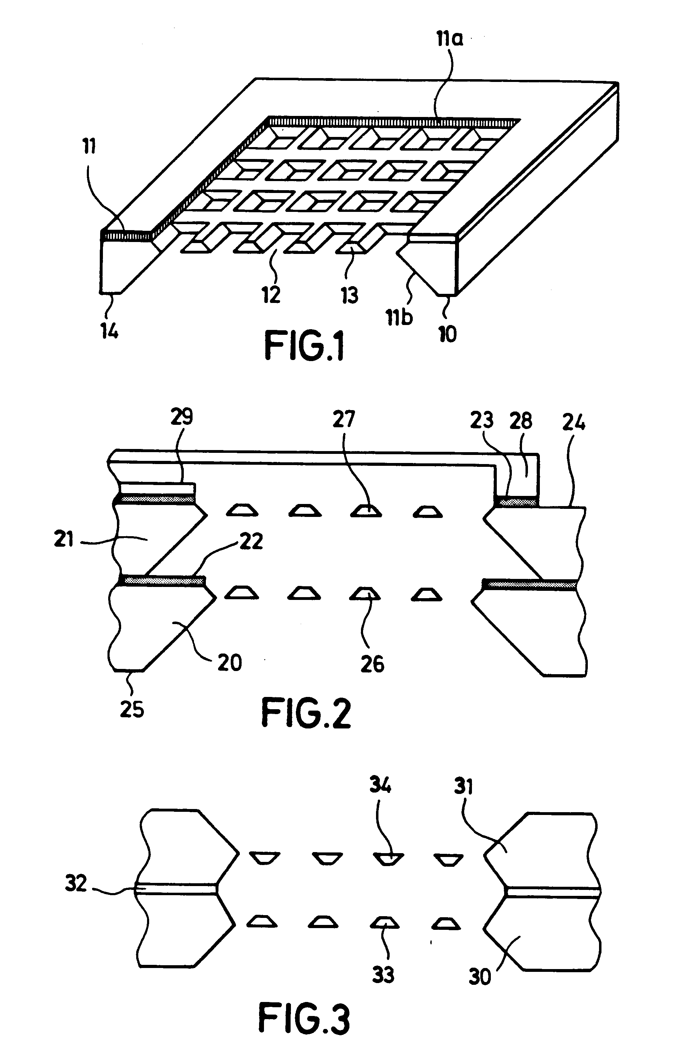

Fig. 1 zeigt einen der beiden Halbleiterkörper, die eine erfindungsgemäße elektrostatische Pumpe in einer ersten Ausführungsform umfaßt. Dieser Halbleiterkörper ist ein einkristalliner Siliziumhalbleiterkörper, der in seiner Gesamtheit mit dem Bezugszeichen 10 bezeichnet ist. Dieser Siliziumhalbleiterkörper 10 ist bevorzugt $n^+$-leitend, jedoch kann dieser 10 auch dotierte epitaktische oder diffundierte Bereiche aufweisen. Bei der gezeigten Ausfürungsform hat der einkristalline Siliziumhalbleiterkörper 10 eine (100)-Kristallorientierung. Auf der Vorderseite des Siliziumhalbleiterkörpers 10 ist eine Isolationsschicht 11 angeordnet, die zumindest in einem durchströmten Bereich eine vorderseitige Ausnehmung 11a hat. Der einkristalline Siliziumhalbleiterkörper hat ferner eine sich gleichfalls zumindest über den durchströmten Bereich erstreckende rückseitige Ausnehmung 11b. Der einkristalline Siliziumkörper hat im Bereich zwischen der vorderseitigen Ausnehmung 11a und der rückseitigen Ausnehmung 11b eine gitterförmige Elektrode 13, die eine Mehrzahl von prismenförmigen Gruben 12 hat, welche den durchströmten Bereich festlegen. Die gitterförmige Elektrode 13 ist ein einstückiger Bestandteil des Siliziumhalbleiterkörpers 10.

Die insoweit beschriebene Struktur des Siliziumhalbleiterkörpers 10 wird mit an sich bekannten Herstellungstechniken der Halbleitertechnologie im Photo-Ätz-Verfahren erzeugt. Hierzu wird zunächst auf dem noch unstrukturierten einkristallinen Siliziumhalbleiterkörper 10 die elektrische Isolationsschicht 11 abgeschieden. Hierfür wird bei der bevorzugten Ausführungsform durch Kathodenzerstäubung eine Pyrex-Glas-Schicht auf einer thermisch erzeugten Siliziumdioxydschicht abgeschieden. Die Ausnehmung 11a wird vorderseitig mit einem geeigneten Verfahren geöffnet. Bei der in Fig. 2 gezeigten Ausführungsform wird gleichzeitig ein Bereich 24 vorderseitig geöffnet, der später mit einem Ohm'schen Kontakt zu dem Siliziumhalbleiterkörper 21 versehen wird.

Anschließend wird ganzflächig auf den insoweit strukturierten Siliziumhalbleiterkörper eine gegen alkalische Ätzlösungen beständige Schicht, die beispielsweise aus Siliziumnitrid bestehen kann, auf die Vorder- und Rückseite des Siliziumhalbleiterkörpers 10 aufgebracht. Diese dient als Ätzstopmaske und wird innerhalb des zuvor geöffneten Bereiches der vorderseitigen Ausnehmung 11a mit üblichen Verfahren photolithografisch strukturiert. Anschließend erfolgt ein anisotroper Ätzprozeß, bei dem die prismenförmigen Gruben 12 erzeugt werden. Falls gitterförmige Elektrodenstrukturen 13 mit steileren Kanten gewünscht sind, können auch isotrope Ätzverfahren eingesetzt werden. Im Falle des bevorzugt verwendeten anisotropen Ätzverfahrens zum Erzeugen der in Fig.1 gezeigten Struktur der gitterförmigen Elektrode 13 wird als Ätzlösung eine 30%ige KOH-Lösung eingesetzt. Die Tiefe der prismenförmige Gruben 12 beträgt je nach gewünschter Dicke der später erzeugten gitterförmigen Elektrode 13 zwischen 1 um und 200 um. Nunmehr wird auf die Struktur vorderseitig ganzflächig eine weitere Ätzstopschicht aufgebracht, die wiederum aus Siliziumnitrid bestehen kann. Anschließend wird nach entsprechender photolithografischer Behandlung im anisotropen Ätzverfahren die rückseitige Ausnehmung 11b soweit geätzt, daß die unteren Bereiche der prismenförmigen Gruben 12 erreicht werden, wodurch sich die gitterförmige Elektrodenstruktur der Elektrode 13 ergibt. Nunmehr werden Reste der Ätzstopschicht (nicht dargestellt) entfernt, eine sich auf dem Silizium gebildete dünne Oxydschicht entfernt, woraufhin die gitterförmige Elektrode 13 mittels üblicher Verfahren mit einer Metallisierung versehen wird.

Je nach gewünschtem Anwendungszweck der erfindungsgemäßen elektrostatischen Pumpe liegt die Größe der Ausnehmung 11a, 11b und damit die Größe des Gitterbereiches 13 zwischen etwa 0,1 mm x 0,1 mm und etwa 10 mm x 10 mm. Typische Größen der durch die prismenförmigen Gruben 12 definierten Öffnungen des Gitters liegen zwischen 2 um x 2 um und 1 mm x 1 mm.

In Abweichung zu der in Fig. 1 gezeigten gitterförmigen Struktur der Elektrode 13 kann diese streifenförmig oder stegförmig ausgestaltet sein.

In weiterer Abweichung zu der in Fig. 1 gezeigten Ausführungsform können an den Kreuzungspunkten der gitterförmigen Elektrode 13 durch Abscheideverfahren Kegelspitzen (nicht dargestellt) angeordnet sein, wodurch eine Konzentration der Ioneninjektion auf bestimmte Punktbereiche gegenüber der Ionenstromverteilung erreicht wird, die mit der gitterförmigen Elektrode 13 erzeugbar ist.

Fig. 2 zeigt eine Querschnittsdarstellung der erfindungsgemäßen mikrominiaturisierten elektrostatsichen Pumpe in einer weiteren Ausführungsform.

Diese umfasst zwei Halbleiterkörper 20, 21, die in Pumpströmungsrichtung übereinander angeordnet sind und jeweils gitterförmige oder stegförmige Elektroden 26, 27 umfassen, die einander im wesentlichen in Pumpströmungsrichtung gegenüberliegen. Bei dieser Ausführungsform, die im wesentlichen durch Zusammensetzen zweier Halbleiterkörper der in Fig. 1 gezeigten Art entsteht, liegen die Elektroden 26, 27 der Halbleiterkörper 20, 21 jeweils im wesentlichen auf Höhe der Vorderseiten der Halbleiterkörper 20, 21 und sind von der Rückseite der Halbleiterkörper 20, 21 jeweils beabstandet. Die beiden Halbleiterkörper 20, 21 werden vorzugsweise dadurch miteinander verbunden, daß die Rückseite des oberen Halbleiterkörpers 21 mit der Pyrex-Glas-Schicht, die die Isolationsschicht 22 des unteren Halbleiterkörpers bildet, durch elektrostatisches Bonden verbunden wird. Alternativ können bei dieser Ausführungsform ebenso wie bei den nachfolgenden noch zu beschreibenden Ausführungsformen andere Verbindungsverfahren eingesetzt werden, wie beispielsweise Waferbonding oder Kleben. Bei dieser Ausführungsform gemäß Fig. 2 entspricht der Abstand der gitterförmigen oder stegförmigen Elektroden 26, 27 im wesentlichen der Dicke des Ausgangsmateriales, d. h. des unbearbeiteten einkristallinen Siliziumhalbleiterkörpers.

In Abweichung zu der Ausführungsform gemäß Fig. 2 kann die gitterförmige Elektrode 13 von der Vorderseite der Halbleiterkörper 20, 21 aus zurückgeätzt werden.

Bei der in Fig. 2 gezeigten Ausführungsform der erfindungsgemäßen elektrostatischen Pumpe ist der obere Halbleiterkörper 21 im Bereich seiner Isolationsschicht 23 mit einem Abdeckkörper 28 verbunden, der eine oder eine Mehrzahl von Austrittsdüsen 29 beinhaltet.

Die in Fig. 3 gezeigte Ausführungsform der elektrostatischen Pumpe gemäß der vorliegenden Erfindung unterscheidet sich im wesentlichen dadurch von der Ausführungsform nach Fig. 2, daß die beiden Halbleiterkörper 30, 31 hier jeweils im Bereich ihrer Isolationsschicht 32 vorderseitig miteinander verbunden sind. Hier sind die Elektroden 33, 34 gegenüber der Vorderseite der Halbleiterkörper 30, 31 zurückgeätzt, wodurch das Ausmaß des Zurückätzens neben der Dicke der Isolationsschicht 32 den gegenseitigen Abstand der beiden Elektroden 33, 34 festlegt. Bei dieser Ausführungsform kann also der Gitterabstand zwischen den Elektroden 33, 34 bzw. der Stegabstand bei Wahl einer stegförmigen Elektrode durch das Ausmaß des Zurückätzens gegenüber der Vorderseite und die Dicke der Isolationsschicht 32 eingestellt werden.

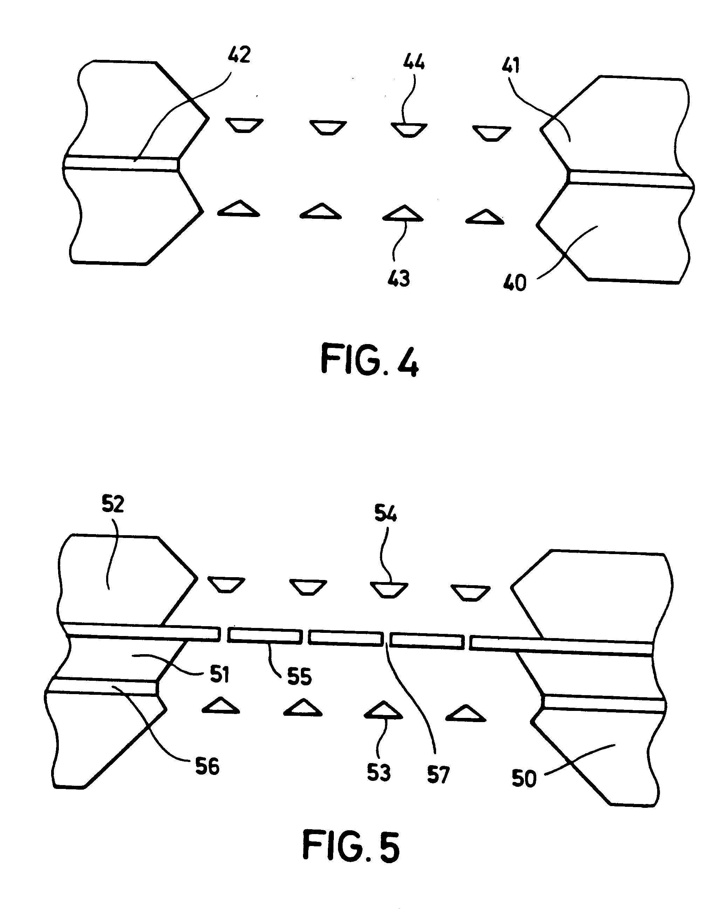

Die weitere Abwandlung der in Fig. 4 gezeigten elektrostatischen Pumpe mit den beiden Halbleiterkörpern 40, 41, die im Bereich der vorderseitigen Isolationsschicht 42 miteinander verbunden sind, unterscheidet sich von der Ausführungsform gemäß Fig. 3 nur dadurch, daß eine 43 der beiden Elektroden 43, 44 eine so schmale Stegbreite der Stegstruktur oder Gitterstruktur aufweist, daß aufgrund der seitlichen Unterätzung der Ätzstopschicht eine schneidenartige Elektrode 43 entsteht, die die Injektion von Ionen in das Gas bzw. die Flüssigkeit aufgrund der hohen Feldstärke an der Schneide besonders begünstigt.

Die in Fig. 5 gezeigte Ausgestaltung der erfindungsgemäßen elektrostatischen Pumpe unterscheidet sich von der Ausführungsform nach Fig. 4 im wesentlichen dadurch, daß zwischen den beiden Halbleiterkörpern 50, 52 mit den zugehörigen, gegenüber der jeweiligen Vorderseite des Halbleiterkörpers zurückgesetzten streifenförmigen oder stegförmigen Elektroden 53, 54 ein dritter Halbleiterkörper 51 mit einer Isolationstrennwand 55 vorgesehen ist, die lediglich im Bereich der einander gegenüberliegenden stegförmigen Elektroden 53, 54 durch Durchströmungsausnehmungen 57 durchsetzt ist. Vorzugsweise ist hier der erste Halbleiterkörper 50 vorderseitig im Bereich seiner Isolationsschicht 56 durch elektrostatisches Bonden mit der Rückseite des dritten Halbleiterkörpers 51 verbunden. Dieser ist im Bereich der Isolationsstrennwand 55 ebenfalls durch elektrostatisches Bonden mit der Vorderseite des zweiten Halbleiterkörpers 52 verbunden.

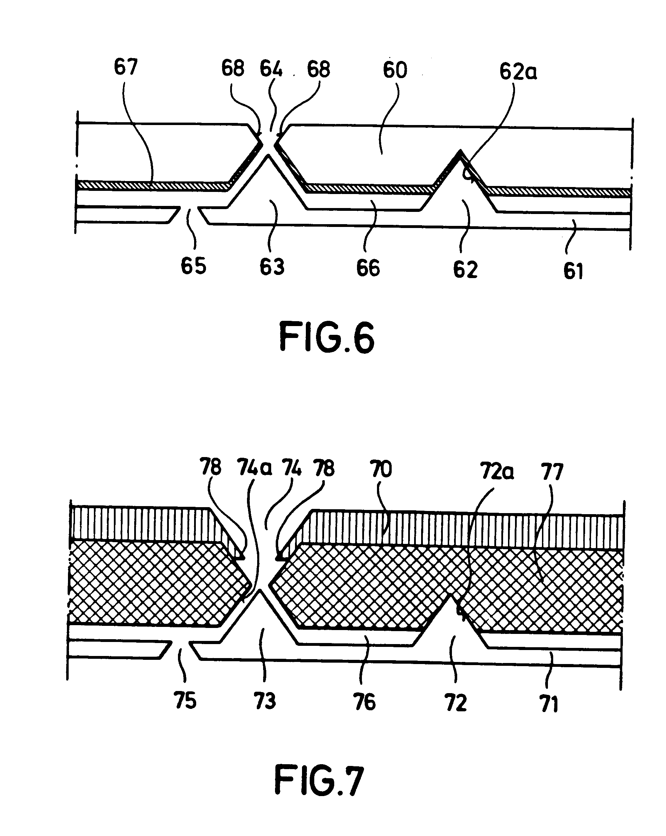

Eine stärker abgewandelte Ausführungsform der erfindungsgemäßen mikrominiaturisierten elektrostatischen Pumpe wird nunmehr unter Bezugnahme auf Fig. 6 erläutert. Bei dieser Ausführungsform hat einer 61 der beiden Halbleiterkörper 60, 61 einen schneidenförmigen Abstandshalter 62, der mit einer Nut 62a des anderen Halbleiterkörpers 60 Eingriff nimmt. Ferner hat dieser Halbleiterkörper 61 einen schneidenartigen Injektor 63. Der andere Halbleiterkörper 60 weist im Bereich des schneidenartigen Injektors 63 des einen Halbleiterkörpers 61 eine im wesentlichen V-förmige Ausnehmung 64 auf, die einen derartigen Abstand der beiden Halbleiterkörper 60, 61 im Bereich des Injektors 63 einhält, daß ein verengter Durchströmungsspalt 64-65 definiert wird. Der andere Halbleiterkörper 60 ist auf seiner dem einen Halbleiterkörper 61 zugewandten Seite mit einer Isolationsschicht 67 bedeckt, die sich nicht nur über die Nut 62a erstreckt, sondern auch über einen wesentlichen Teil der V-förmigen Ausnehmung 64 erstreckt, so daß die einander gegenüberliegenden Elektroden einerseits durch die Spitze des schneidenartigen Injektors 63 und andererseits durch die die Spitze be-

nachbarten Randbereiche der Ausnehmung 64 des anderen Halbleiterkörpers 60 erzeugt werden.

Im Bereich des Durchströmungsspaltes zwischen dem Injektor 63 und der Ausnehmung 64 der beiden Halbleiterkörper 60, 61 ist eine nutförmige oder spaltförmige Eintrittsdüse 65 vorgesehen. Mit Ausnahme des Eingriffsbereiches am Ort des Abstandshalters 62 sind die beiden Halbleiterkörper 60, 61 durch einen Freiraum 66 voneinander beabstandet.

Die in Fig. 7 gezeigte letzte Ausführungsform unterscheidet sich von der Ausführungsform gemäß Fig. 6 im wesentlichen dadurch, daß ein Isolierkörper 77 zwischen den beiden Halbleiterkörpern 70, 71 angeordnet ist. Einer der beiden Halbleiterkörper 71 nimmt mit seinem Abstandshalter 72 Eingriff mit einer Nut 72a des Isolierkörpers 77 und definiert durch diese Lagefixierung einen Freiraum 76 zwischen dem Isolierkörper 77 und diesem Halbleiterkörper 71. In Übereinstimmung mit dem vorher beschriebenen Ausführungsbeispiel weist auch hier dieser Halbleiterkörper 71 einen schneideartigen Injektor 73 auf, der mit einer V-förmigen Ausnehmung 74a des Isolierkörpers 77 einen Durchströmungsspalt 74-75 bildet, welcher im Bereich einer nutförmigen Eintrittsdüse 75 dieses Halbleiterkörpers 71 endet. Der andere Halbleiterkörper 70 weist überhalb der Ausnehmung 74a des Isolierkörpers 77 eine V-förmig Ausnehmung 74 auf, durch welche spitzwinklige Elektrodenkantenbereiche 78 festgelegt werden, die die Gegenelektroden zum schneidenförmigen Injektor 73 bilden.

Zum Betrieb der elektrostatischen Pumpe werden die Halbleiterkörper 20, 21; 30, 31; 40 41; 50, 51; 60, 61; 70, 71 jeweils über Ohm'sche Kontakte (vergleiche Bezugszeichen 24, 25 gemäß Fig. 2) mit einer Gleichspannungsquelle verbunden, so daß eine elektrische Potentialdifferenz zwischen den beiden Elektroden entsteht, die zur Injektion von Ionen in das zu pumpende Gas bzw. in die zu pumpende Flüssigkeit ausreicht.

Selbstverständlich können zur Erhöhung der Fördermenge der erfindungsgemäßen Pumpe mehrere Pumpenkörper der in den Fig. 2 bis 7 gezeigten Art parallel geschaltet werden. Ferner können auch mehrere derartige Pumpen hintereinander geschaltet werden, wenn dies aus Gründen des erhöhten Druckes wünschenswert ist. Ebenfalls können an Stelle einer Reihenschaltung von Pumpen mehr als zwei Halbleiterkörper übereinander angeordnet werden.

An Stelle des bevorzugt verwendeten Halbleitermateriales Silizium kommen auch sämtliche andere Halbleitermaterialien als Ausgangsmaterial in Betracht.

Jedes der gezeigten Ausführungsbeispiele kann mit zusätzlichen Eintritts- und Austrittsdüsen versehen werden, auch wenn dies nur bei den Ausführungsbeispielen nach den Figuren 2, 6 und 7 gezeigt ist.

Letztlich kann die erfindungsgemäße Pumpe auch zum Erzeugen eines statischen Druckes eingesetzt werden, so daß der verwendete Begriff "Pumpe" auch Anwendungsfälle umfassen soll, bei denen ein Fluid ohne Fluidströmung lediglich mit einem Druck beaufschlagt werden soll. Ferner soll unter dem Begiff "Pumpe" im Sinne der vorliegenden Erfindung auch jegliche Einrichtung zur Beschleunigung oder Abbremsung einer Fluidstömung verstanden werden.

## Patentansprüche

1. Verfahren zum Herstellen einer mikrominiaturisierten elektrostatischen Pumpe mit zwei in einer zu pumpenden, im wesentlichen nichtleitenden Flüssigkeit oder in einem zu pumpenden, im wesentlichen nichtleitenden Gas angeordneten, voneinander im wesentlichen in Pumpströmungsrichtung beabstandeten Elektroden, (13; 26, 27; 33, 34; 43, 44; 53, 54; 63, 68; 73, 78), die mit einem Potential zum Injizieren oder Beschleunigen eines zwischen den elektroden durch die Flüssigkeit oder das Gas fließenden Ionenstromes beaufschlagbar sind und mit zwei Körpern (10; 20, 21; 30, 31; 40, 41; 50, 52; 60, 61; 70, 71), die derart durch geätzte Ausnehmungen (12) strukturiert sind, daß die elektroden einen einstückigen Bestandteil des Körpers bilden,
   dadurch gekennzeichnet,
   daß die Körper Halbleiterkörper (10; 20, 21; 30, 31; 40, 41; 50, 52; 60, 61; 70, 71) sind,
   daß auf einer seite des Halbleiterkörpers eine gegen Ätzmittel beständige Schicht aufgebracht wird,
   daß die gegen Ätzmittel beständige Schicht photolithografisch mit Ätzfenstern strukturiert wird,
   daß die Ausnehmungen (12) ausgehend von den Ätzfenstern der gegen Ätzmittel beständigen Schicht durch den Halbleiterkörper (10) zur Festlegung von stegförmigen oder gitterförmigen Elektroden in Pumpströmungsrichtung geätzt werden, und
   daß die Halbleiterkörper derart zueinander angeordnet werden, daß sich deren Hauptflächen im wesentlichen senkrecht zu der Pumpströmungsrichtung erstrecken und einander im wesentlichen in Pumpströmungsrichtung gegenüberliegen.

2. Mikrominiaturisierte elektrostatische Pumpe mit zwei in einer zu pumpenden, im wesentlichen nichtleitenden Flüssigkeit oder in einem zu pumpenden, im wesentlichen nichtleitenden Gas angeordneten, voneinander im wesentlichen in Pumpströmungsrichtung beabstandeten Elektroden (13; 26, 27; 33, 34; 43, 44; 53, 54; 63, 68; 73, 78), die mit einem Potential zum Injizieren oder Beschleunigen eines zwischen den elektroden durch die Flüssigkeit oder das Gas fließenden Ionenstromes beaufschlagbar sind, und mit zwei Körpern (10; 20, 21; 30, 31; 40, 41; 50, 52; 60, 61; 70, 71), die derart durch geätzte Ausnehmungen strukturiert sind, daß die elektroden einen einstückigen Bestandteil der Körper bilden,

dadurch gekennzeichnet,

daß die Körper (10; 20, 21; 30, 31; 40, 41; 50, 52; 60, 61; 70, 71) und die Elektroden (13; 26, 27; 33, 34; 43, 44; 53, 54; 63, 68; 73, 78) aus einem Halbleitermaterial bestehen,

daß sich die Hauptflächen der Körper (10; 20, 21; 30, 31; 40, 41; 50, 52; 60, 61; 70, 71) im wesentlichen senkrecht zu der Pumpströmungsrichtung erstrecken und einander im wesentlichen in Pumpströmungsrichtung gegenüberliegen, und

daß sich die geätzten Ausnehmungen (12) beidseitig einer jeden Elektrode im wesentlichen in Pumpströmungsrichtung durch die Körper erstrecken.

3. Mikrominiaturisierte elektrostatische Pumpe nach Anspruch 2, dadurch gekennzeichnet,

daß die aus einem Halbleitermaterial bestehenden Elektroden (13; 26, 27; 33, 34; 43, 44; 53, 54; 63, 68; 73, 78) eine Oberflächenmetallisierung aufweisen.

4. Mikrominiaturisierte elektrostatische Pumpe nach Anspruch 2 oder 3, dadurch gekennzeichnet,

daß die Elektroden (13; 26, 27; 33, 34; 43, 44) gitterförmig ausgebildet sind.

5. Mikrominiaturisierte elektrostatische Pumpe nach Anspruch 2 oder 3, dadurch gekennzeichnet,

daß die elektroden (13; 26, 27; 33, 34; 43, 44; 53, 54; 63; 73) stegförmig ausgebildet sind.

6. Mikrominiaturisierte elektrostatische Pumpe nach einem der Ansprüche 2 bis 5, dadurch gekennzeichnet,

daß zumindest eine der Elektroden (43; 53; 63; 73) dreieckig oder schneidenförmig ist.

7. Mikrominiaturisierte elektrostatische Pumpe nach Anspruch 4 oder 5, dadurch gekennzeichnet,

daß die gitter- oder stegförmig ausgebildeten Elektroden (26, 27; 33, 34; 43, 44) der beiden Halbleiterkörper (20, 21; 30, 31; 40, 41; 50, 52) im wesentlichen einander gegenüberliegend angeordnet sind.

8. Mikrominiaturisierte elektrostatische Pumpe nach einem der Ansprüche 2 bis 7, dadurch gekennzeichnet,

daß die Elektroden (26, 27) beider Halbleiterkörper (20, 21) jeweils auf der Höhe der Vorderseite der Halbleiterkörper (20, 21) liegen und jeweils von der Rückseite der Halbleiterkörper (20, 21) beabstandet sind, und

daß die Halbleiterkörper (20, 21) derart angeordnet sind, daß die Rückseite des einen Halbleiterkörpers (21) mit der Vorderseite (22) des anderen Halbleiterkörpers (20) verbunden ist.

9. Mikrominiaturisierte elektrostatische Pumpe nach einem der Ansprüche 2 bis 8, dadurch gekennzeichnet,

daß die Elektroden (33, 34; 43, 44; 53, 54) beider Halbleiterkörper (30, 31; 40, 41; 50, 52) gegenüber deren Vorderseite beabstandet angeordnet sind, und

daß die Halbleiterkörper jeweils mit ihren Vorderseiten miteinander verbunden sind.

10. Mikrominiaturisierte elektrostatische Pumpe nach einem der Ansprüche 6 bis 9, dadurch gekennzeichnet,

daß zwischen den beiden Halbleiterkörpern (50, 52) ein dritter Halbleiterkörper (51) angeordnet ist, der eine sich im wesentlichen senkrecht zur Strömungsrichtung erstreckende Trennwand (55) bildet, die lediglich im Bereich der sich im wesentlichen einander gegenüberliegenden stegförmigen Elektroden (53, 54) durch Durchströmungsausnehmungen (57) durchsetzt ist.

11. Mikrominiaturisierte elektrostatische Pumpe nach einem der Ansprüche 2 bis 10, dadurch gekennzeichnet,

daß die Halbleiterkörper (20, 21) durch elektrostatisches Bonden miteinander verbunden sind.

12. Mikrominiaturisierte elektrostatische Pumpe nach Anspruch 11, dadurch gekennzeichnet,

daß zumindest einer (20) der durch elektrostatisches Bonden miteinander verbundenen Halbleiterkörper (20, 21) im Verbindungsbereich mit dem anderen Halbleiterkörper (21) eine durch Kathodenzerstäubung aufgebrachte Pyrex-Glas-Schicht aufweist.

13. Mikrominiaturisierte elektrostatische Pumpe nach einem der Ansprüche 2 bis 10, dadurch gekennzeichnet,

daß die Halbleiterkörper (20, 21; 30, 31; 40, 41; 50, 51, 52; 60, 61; 70, 71) miteinander verklebt sind.

14. Mikrominisaturisierte elektrostatische Pumpe nach Anspruch 2 oder 3, dadurch gekennzeichnet,

daß einer (61) der beiden Halbleiterkörper (60, 61) einen Abstandshalter (62) zur Eingriffnahme mit dem anderen Halbleiterkörper (60) und einen schneidenartigen Injektor (63) aufweist, und

daß der andere Halbleiterkörper (60) eine im Querschnitt im wesentlichen V-förmige Ausnehmung (64) aufweist, die zusammen mit dem schneidenartigen Injektor (63) einen Durchströmungsspalt (64-65) definiert.

15. Mikrominiaturisierte elektrostatische Pumpe nach Anspruch 14, dadurch gekennzeichnet,

daß der andere Halbleiterkörper (60) eine Isolierschicht (67) aufweist, die seine dem einem Halbleiterkörper (61) zugewandte Seite bedeckt und sich von dieser aus zumindest über einen Teil der im wesentlichen V-förmigen Ausnehmung (64) erstreckt.

16. Mikrominiaturisierte elektrostatische Pumpe nach Anspruch 2 oder 3, dadurch gekennzeichnet,

daß ein Isolierkörper (77) zwischen den beiden Halbleiterkörpern (70, 71) angeordnet ist,

daß einer (71) der beiden Halbleiterkörper (70, 71) einen Abstandshalter (72) und einen schneidenförmigen Injektor (73) aufweist,

daß der Isolierkörper (77) eine im wesentlichen V-förmige Ausnehmung (74a) aufweist, die zusammen mit dem schneidenförmigen Injektor (73) einen Durchströmungsspalt (74- 75) definiert, und

daß der andere Halbleiterkörper (70) im Bereich der im wesentlichen V-förmigen Ausnehmung (74a) des Isolierkörpers (77) zumindest eine mit dem schneidenförmigen Injektor (73) zusammenwirkende Gegenelektrode (78) bildet.

17. Mikrominiaturisierte elektrostatische Pumpe nach einem der Ansprüche 2 bis 16, dadurch gekennzeichnet,

daß die Halbleiterkörper (10; 20, 21; 30, 31; 40, 41; 50, 51, 52; 60, 61; 70, 71) durch Photoätzverfahren strukturiert sind.

18. Mikrominiaturisierte elektrostatische Pumpe nach Anspruch 4 oder 5, dadurch gekennzeichnet,

daß der durchströmte Bereich der Halbleiterkörper (10) eine Fläche von 0,1 mm x 0,1 mm bis 10 mm x 10 mm aufweist.

19. Mikrominiaturisierte elektrostatische Pumpe nach Anspruch 18, dadurch gekennzeichnet,

daß der gegenseitige Abstand der Elektrodenstege der elektrode des gleichen Halbleiterkörpers zwischen 2 µm und 1 mm beträgt.

20. Mikrominiaturisierte elektrostatische Pumpe nach Anspruch 18 oder 19, dadurch gekennzeichnet,

daß der Abstand der sich gegenüberliegenden Elektroden (26,27; 33, 34; 43, 44; 53, 54; 63, 68; 73, 78) der beiden Halbleiterkörper (20, 21; 30, 31; 40, 41; 50, 52; 60, 61; 70, 71) zwischen 5 µm und 500 µm beträgt.

**Claims**

1. A method of producing a microminiaturized electrostatic pump including two electrodes (13; 26, 27; 33, 34; 43, 44; 53, 54; 63, 68; 73, 78), which are arranged in an essentially non-conductive liquid to be pumped or in an essentially non-conductive gas to be pumped and which are spaced apart essentially in the pump flow direction, said electrodes being adapted to have applied thereto a potential for injecting or for accelerating an ion current which flows between said electrodes through said liquid or through said gas, and further including two components (10; 20, 21; 30, 31; 40, 41; 50, 52; 60, 61; 70, 71), which are structured by etched openings (12) in such a way that the electrodes form an integral constituent part of the respective component,

**characterized in**

that the components are semiconductor components (10; 20, 21; 30, 31; 40, 41; 50, 52; 60, 61; 70, 71),

that a layer which is resistant to etching agents is applied to one side of the semiconductor component,

that the layer, which is resistant to etching agents, is photolithographically structured with etch windows,

that, starting from said etch windows of the etching agent-resistant layer, the openings (12) are etched through the semiconductor component (10) so as to define web-shaped or grid-shaped electrodes in the pump flow direction, and

that the semiconductor components are arranged relative to one another in such a way that their main surfaces extend essentially at right angles to the pump flow direction and are disposed in opposed relationship with one another essentially in the pump flow direction.

2. A microminiaturized electrostatic pump including two electrodes (13; 26, 27; 33, 34; 43, 44; 53, 54; 63, 68; 73, 78), which are arranged in an essentially non-conductive liquid to be pumped or in an essentially non-conductive gas to be pumped and which are spaced apart essentially in the pump flow direction, said electrodes being adapted to have applied thereto a potential for injecting or for accelerating an ion current which flows between said electrodes through said liquid or through said gas, and further including two components (10; 20, 21; 30, 31; 40, 41; 50, 52; 60, 61; 70, 71), which are structured by etched openings in such a way that the electrodes form an integral constituent part of said components,

    **characterized in**

    that the components (10; 20, 21; 30, 31; 40, 41; 50, 52; 60, 61; 70, 71) and the electrodes (13; 26, 27; 33, 34; 43, 44; 53, 54; 63, 68; 73, 78) consist of a semiconductor material,

    that the main surfaces of said components (10; 20, 21; 30, 31; 40, 41; 50, 52; 60, 61; 70, 71) extend essentially at right angles to the pump flow direction, and are arranged in essentially opposed relationship with one another when seen in the pump flow direction, and

    that the etched openings (12) extend through the components essentially in the pump flow direction at both sides of each electrode.

3. A microminiaturized electrostatic pump according to claim 2,

    **characterized in**

    that the electrodes (13; 26, 27; 33, 34; 43, 44; 53, 54; 63, 68; 73, 78) consisting of a semiconductor material are provided with a metallic coating on their surfaces.

4. A microminiaturized electrostatic pump according to claim 2 or 3,

    **characterized in**

    that the electrodes (13; 26, 27; 33, 34; 43, 44) have a grid-shaped structural design.

5. A microminiaturized electrostatic pump according to claim 2 or 3,

    **characterized in**

    that the electrodes (13; 26, 27; 33, 34; 43, 44; 53, 54; 63, 73) have a web-shaped structural design.

6. A microminiaturized electrostatic pump according to one of the claims 2 to 5,

    **characterized in**

    that at least one of the electrodes (43; 53; 63; 73) is triangular or edge-shaped.

7. A microminiaturized electrostatic pump according to claim 4 or 5,

    **characterized in**

    that the grid- or web-shaped electrodes (26, 27; 33, 34; 43, 44) of the two semiconductor components (20, 21; 30, 31; 40, 41; 50, 52) are arranged in essentially opposed relationship with one another.

8. A microminiaturized electrostatic pump according to one of the claims 2 to 7,

    **characterized in**

    that the electrodes (26, 27) of both semiconductor components (20, 21) are respectively positioned on one level with the front side of said semiconductor components (20, 21) and are respectively arranged in spaced relationship with the reverse side of said semiconductor components (20, 21), and

    that the semiconductor components (20, 21) are arranged in such a way that the reverse side of one semiconductor component (21) is connected to the front side (22) of the other semiconductor component (20).

9. A microminiaturized electrostatic pump according to one of the claims 2 to 8,

    **characterized in**

    that the electrodes (33, 34; 43, 44; 53, 54) of both semiconductor components (30, 31; 40, 41; 50, 52) are arranged in spaced relationship with the front sides of said semiconductor components, and

    that said semiconductor components have their respective front sides interconnected.

10. A microminiaturized electrostatic pump according to one of the claims 6 to 9,

    **characterized in**

    that the two semiconductor components (50, 52) have arranged between them a third semiconductor component (51) defining a partition (55) which extends essentially at right angles to the direction of flow and which has formed therein flow-through openings (57) only in the area of the essentially opposed web-shaped electrodes (53, 54).

11. A microminiaturized electrostatic pump accoding to one of the claims 2 to 10,

    **characterized in**

    that the semiconductor components (20, 21) are interconnected by electrostatic bonding.

12. A microminiaturized electrostatic pump according to claim 11,

    **characterized in**

    that at least one (20) of the semiconductor components (20, 21) interconnected by electrostatic bonding is provided with a Pyrex glass layer, which has been applied by cathode sputtering and which is provided in the area of connection with the other semiconductor component (21).

13. A microminiaturized electrostatic pump according to one of the claims 2 to 10,

    **characterized in**

    that the semiconductor components (20, 21; 30, 31; 40, 41; 50, 51, 52; 60, 61; 70, 71) are glued together.

14. A microminiaturized electrostatic pump according to claim 2 or 3,

    **characterized in**

    that one (61) of the two semiconductor components (60, 61) is provided with a spacer (62) for engagement with the other semiconductor component (60) and with an edgelike injector (63), and

    that the other semiconductor component (60) is provided with an opening (64), which is essentially V-shaped in cross-section and which defines together with the edgelike injector (63) a flow-through gap (64-65).

15. A microminiaturized electrostatic pump according to claim 14,

    **characterized in**

    that the other semiconductor component (60) is provided with an insulating layer (67), which covers the side of said component (60) facing said semiconductor component (61) and which extends from said side over at least part of said essentially V-shaped opening (64).

16. A microminiaturized electrostatic pump according to claim 2 or 3,

    **characterized in**

    that an insulating body (77) is arranged between the two semiconductor components (70, 71),

    that one (71) of the two semiconductor components (70, 71) is provided with a spacer (72) and with an edgelike injector (73),

    that the insulating body (77) is provided with an essentially V-shaped opening (74a) defining together with said edgelike injector (73) a flow-through gap (74-75), and

    that, in the area of the essentially V-shaped opening (74a) of the insulating body (77), the other semiconductor component (70) defines at least one counterelectrode (78) cooperating with said edgelike injector (73).

17. A microminiaturized electrostatic pump according to one of the claims 2 to 16,

    **characterized in**

    that the semiconductor components (10; 20, 21; 30, 31; 40, 41; 50, 51, 52; 60, 61; 70, 71) have been structured by means of photoetch processes.

18. A microminiaturized electrostatic pump according to claim 4 or 5,

    **characterized in**

    that the flow-through region of the semiconductor components (10) has an area of from 0.1 mm x 0.1 mm up to 10 mm x 10 mm.

19. A microminiaturized electrostatic pump according to claim 18,

    **characterized in**

    that the mutual distance between the electrode webs of the electrode of the same semiconductor component is in the range of from 2 $\mu$m to 1 mm.

20. A microminiaturized electrostatic pump according to claim 18 or 19,

    **characterized in**

    that the distance between the opposed electrodes (26, 27; 33, 34; 43, 44; 53, 54; 63, 68; 73, 78) of the two semiconductor components (20, 21; 30, 31; 40, 41; 50, 52; 60, 61; 70, 71) is between 5 $\mu$m and 500 $\mu$m.

**Revendications**

1. Procédé de fabrication d'une poque électrostatique microminiaturisée à deux électrodes (13; 26, 27; 33, 34; 43, 44; 53, 54; 63, 68; 73, 78) distantes l'une de l'autre sensiblement dans le sens de circulation de la pompe, disposées dans un fluide à pomper, essentiellement non-conducteur, ou dans un gaz à pomper, essentiellement non-conducteur, qui peuvent recevoir un potentiel pour injecter ou pour ralentir un courant ionique circulant dans le liquide ou dans le gaz entre les électrodes, et à deux corps (10; 20, 21 30, 31; 40, 41; 50, 52; 60, 61; 70, 71) qui sont structurés, par des évidements (12) corrodés, de telle manière que les électrodes constituent un élément d'une seule pièce du corps,

   caractérisé en ce

   que les corps sont des corps semi-conducteurs (10; 20, 21; 30, 31; 40, 41; 50, 52; 60, 61; 70, 71),

   que sur une face du corps semi-conducteur est appliquée une couche résistant aux agents corrosifs,

   que la couche résistant aux agents corrosifs est structurée photolithographiquement avec des fenêtres de corrosion,

   que les évidements (12) sont corrodés, partant des fenêtres de corrosion de la couche résistant aux agents corrosifs, à travers le corps semi-conducteur (10), pour la fixation d'électrodes en forme d'entretoise ou en forme de grille dans le sens de circulation de la pompe, et

   que les corps semi-conducteurs sont disposés l'un par rapport à l'autre de telle manière que leurs faces principales s'étendent sensiblement perpendiculairement au sens de circulation de la poque et se trouvent l'une en face de l'autre sensiblement dans le sens de circulation de la pompe.

2. Pompe électrostatique microminiaturisée à deux électrodes (13; 26, 27; 33, 34; 43, 44; 53, 54; 63, 68; 73, 78) distantes l'une de l'autre sensiblement dans le sens de circulation de la pompe, disposées dans un fluide à pomper, essentiellement non-conducteur, ou dans un gaz à pomper, essentiellement non-conducteur, qui peuvent recevoir un potentiel pour injecter ou pour ralentir un courant ionique circulant dans le liquide ou dans le gaz entre les électrodes, et à deux corps (10; 20, 21; 30, 31; 40, 41; 50, 52; 60, 61; 70, 71) qui sont structurés, par des évidements corrodés, de telle manière que les électrodes constituent un élément d'une seule pièce du corps,
caractérisé en ce
que les corps (10; 20, 21; 30, 31; 40, 41; 50, 52; 60, 61; 70, 71) et les électrodes (13; 26, 27; 33, 34; 43, 44; 53, 54; 63, 68; 73, 78) sont réalisés en un matériau semi-conducteur,
que les faces principales des corps (10; 20, 21; 30, 31; 40, 41; 50, 52; 60, 61; 70, 71) s'étendent sensiblement perpendiculairement au sens de circulation de la pompe et se trouvent l'une en face de l'autre sensiblement dans le sens de circulation de la pompe, et que les évidements corrodés (12) s'étendent de part et d'autre de chaque électrode, sensiblement dans le sens de circulation de la pompe, à travers les corps.

3. Pompe électrostatique microminiaturisée suivant la revendication 2, caractérisée en ce que les électrodes (13; 26, 27; 33, 34; 43, 44; 53, 54; 63, 68; 73, 78) réalisées en un matériau semi-conducteur présentent une métallisation de la surface.

4. Pompe électrostatique microminiaturisée suivant la revendication 2 ou 1, caractérisée en ce que les électrodes (13; 26, 27; 33, 34; 43, 44) sont réalisées en forme de grille.

5. Pompe électrostatique microminiaturisée suivant la revendication 2 ou 3, caractérisée en ce que les électrodes (13; 26, 27; 33, 34; 43, 44; 53, 54; 63; 73) sont réalisées en forme d'entretoise.

6. Pompe électrostatique microminiaturisée suivant l'une des revendications 2 à 5, caractérisée en ce que les électrodes (43; 53; 63; 73) sont réalisées de forme triangulaire ou en forme d'arête.

7. Pompe électrostatique microminiaturisée suivant la revendication 4 ou 5, caractérisée en ce que les électrodes (26, 27; 33, 34; 43, 44) réalisées en forme de grille ou d'entretoise des deux corps semi-conducteurs (20, 21; 30, 31; 40, 41; 50, 52) sont disposées sensiblement l'une en face de l'autre.

8. Pompe électrostatique microminiaturisée suivant l'une des revendications 2 à 7, caractérisée en ce que les électrodes (26, 27) des deux corps semi-conducteurs (20, 21) se situent, chacune, à hauteur de la face avant des corps semi-conducteurs (20, 21) et sont, chacune, distantes de la face arrière des corps semi-conducteurs (20, 21), et que les corps semi-conducteurs (20, 21) sont disposés de telle manière que la face arrière de l'un (21) des corps semi-conducteurs est assemblée à la face avant (22) de l'autre corps semi-conducteur (20).

9. Pompe électrostatique microminiaturisée suivant l'une des revendications 2 à 8, caractérisée en ce que les électrodes (33, 34; 43, 44; 53, 54) des deux corps semi-conducteurs (30, 31; 40, 41; 50, 52) sont disposées distantes par rapport à la face avant de ces derniers, et
que les corps semi-conducteurs sont, chacun, assemblés l'un à l'autre par leurs surfaces avant.

10. Pompe électrostatique microminiaturisée suivant l'une des revendications 6 à 9, caractérisée en ce qu'entre les deux corps semi-conducteurs (50, 52) est disposé un troisième corps semi-conducteur (51) qui forme une cloison (55), s'étendant sensiblement perpendiculairement au sens de circulation, qui est traversée par des évidements de passage uniquement à l'endroit des électrodes (51, 54) en forme d'entretoise se trouvant sensiblement l'une en face de l'autre.

11. Pompe électrostatique microminiaturisée suivant l'une des revendications 2 à 10, caractérisée en ce que les corps semi-conducteurs (20, 21) sont assemblés l'un à l'autre par liaison électrostatique.

12. Pompe électrostatique microminiaturisée suivant la revendication 11, caractérisée en ce qu'au moins l'un (20) des corps semi-conducteurs (20, 21) assemblés l'un à l'autre par liaison électrostatique présente, dans la zone d'assemblage à l'autre corps semi-conducteur (21), une couche de verre pyrex appliquée par pulvérisation cathodique.

13. Pompe électrostatique microminiaturisée suivant l'une des revendications 2 à 10, caractérisée en ce que les corps semi-conducteurs (20, 21; 30, 31; 40, 41; 50, 51, 52; 60, 61; 70, 71) sont collés l'un à l'autre.

14. Pompe électrostatique microminiaturisée suivant la revendication 2 ou 3, caractérisée en ce que l'un (61) des deux corps semi-conducteurs (60, 61) présente un écarteur (62) pour venir en prise avec l'autre corps semi-conducteur (60) et un injecteur (61) en forme d'arête, et que l'autre corps semi-conducteur (60) présente un évidement (64) de section sensiblement en forme de V qui définit, avec l'injecteur (63) en forme d'arête, une ouverture de passage (64-65).

15. Pompe électrostatique microminiaturisée suivant la revendication 14, caractérisée en ce que l'autre corps semi-conducteur (60) présente une couche d'isolation (67) qui recouvre sa face orientée vers l'un (61) des corps semi-conducteurs et s'étend, à partir de cette dernière, sur au moins une partie de l'évidement (64) sensiblement en forme de V.

16. Pompe électrostatique microminiaturisée suivant la revendication 2 ou 3, caractérisée en ce qu'un corps isolant (77) est disposé entre les deux corps semi-conducteurs (70, 71), que l'un (71) des deux corps semi-conducteurs (70, 71) présente un écarteur (72) et un injecteur (73) en forme d'arête, que le corps isolant (77) présente un évidement (74a) sensiblement en forme de V qui, avec l'injecteur (73) en forme d'arête, définit une ouverture de passage (74-75), et que l'autre corps semi-conducteur (70) forme, à l'endroit de l'évidement (74a) sensiblement en forme de V du corps isolant (77), au moins une contre-électrode (78) coopérant avec l'injecteur (73) en forme d'arête.

17. Pompe électrostatique microminiaturisée suivant l'une des revendications 2 à 16, caractérisée en ce que les corps semi-conducteurs (10; 20, 21; 30, 31; 40, 41; 50, 51, 52; 60, 61; 70, 71) sont structurés par procédé de photogravure.

18. Pompe électrostatique microminiaturisée suivant la revendication 4 à 5, caractérisée en ce que la zone traversée du corps semi-conducteur (10) présente une surface de 0,1 mm x 0,1 mm à 10 mm x 10 mm.

19. Pompe électrostatique microminiaturisée suivant la revendication 18, caractérisée en ce que la distance respective entre les entretoises d'électrode de l'électrode du même corps semi-conducteur est comprise entre 2 $\mu$m et 1 mm.

20. Pompe électrostatique microminiaturisée suivant la revendication 19 ou 19, caractérisée en ce que la distance entre les électrodes se trouvant l'une face à l'autre (26, 27; 33, 34; 43, 44; 53, 54; 63, 68; 73, 78) des deux corps semi-conducteurs (20, 21; 30, 31; 40, 41; 50, 52; 60, 61; 70, 71) est comprise entre 5 $\mu$m et 500 $\mu$m.

**FIG.1**

**FIG.2**

**FIG.3**

FIG. 4

FIG. 5

**FIG.6**

**FIG.7**